# EUROPEAN PATENT APPLICATION

(11) **EP 3 748 240 A1**
(43) Date of publication of application: **09.12.2020**
(21) Application number: 19382454.7
(22) Date of filing: 03.06.2019
(51) Int. Cl.: F24F 1/022, F24F 11/84, F24F 12/00, F24F 5/00

(54) **THERMAL ENERGY INTERCHANGER AND OPTIMIZER SYSTEM FOR HOUSING, INDUSTRIAL INSTALLATIONS, PREMISE OR SIMILAR**

(71) Applicant: Patentbox Internacional, S.L., 28046 Madrid (ES)
(72) Inventor: DE LA FUENTE DIAZ, Margarita, 28046 Madrid (ES)
(74) Representative: De la Fuente Fernandez, Dionisio

(57) **Abstract**

The present invention reveals a system that allow interchange and optimize thermic energy by means of which has the capability the extraction of the air proceeded from the outside environment or the dwelling inner zone, industrial installation, premises or similar, for an energy transfer to another flow by means of interchangers, the system comprises an air entrance (1) from the outside, air entrance from (2) the inner zone, outlet air (3) to the outside zone and outlet air (4) to the inner zone, an interchanger (5) where comes the input flows, an initial fan-interchanger set (7) that direct the inlet air from the outside to the interchanger mentioned (5), a second fan-interchanger set (6) that direct the dwelling inner air to the interchanger mentioned (5), an accumulator (8) that include a condenser in connection to the outlet air (3) and the means of conduction intro the system.

## Description

### INVENTION OBJECT

The object of the invention reveal a system that allow to interchange and optimize thermal energy, through which it is possible to extract a circulating fluid, particularly air from the outside environment, or from the inner of a dwelling, in order to make an energetic transfer to another air stream by interchanger means, with the particularly that the recovered energy can be used both for the generation of hot water and for environment heating, or for the purpose of cooling the installation space.

### BACKGROUND OF THE INVENTION

At the industrial and domestic level, is common the use of devices which it need cool and other one that require heat. Refrigerating groups that are currently installed when cold is necessary, which discharge the heat absorbed from the process into the atmosphere; however, in the process which the requirement is heat, are installed heater or cogeneration system to generate the necessary heat based on consuming fossil energies. There it also exists the possibility of generated cold from the heat, by absorption machines to take advantage of some heat generated in cogeneration installation, but their frigorific efficiency is very low (COP's from the order between 0,7 to 1). The heat or cool production represents an important energetic cost for industry, whereby the technical problem that arises, is the development of a device that permit a better use of the heat released by the different devices and to obtain an energy cost reduction, also avoid the discharge to the environment. The invention owner does not know the existence of any system that allow to solve the problems described.

Also there are advantage thermic devices, applicable in households constituted by an assembly of plates welded to each other, susceptible to be left recessed into a masonry hole communicated with the chimney, essentially characterised to be doted of two pair of tubular attachments, which are located in directly communication with a heater inner chamber, located into the mentioned set, they acts as tubular couplings, located in their bottom zone to assemble the air entrance tubes, since the lower pair are located in the high zone and has the mission to allow the assemble the heat air distribution tubes, by means which disposition take an advantage of the thermic generated effect from the fire which burn at home, to provide heater to the remote areas from the same premises or room where is located the last, or to another premises or rooms contiguous to the same ones.

During operation of household appliances, such as washing machines or dishwasher, waste water is discharged which contain large quantities of heat that usually are missed. Similarly, the calorific power is lost from the shower or washbasin. There are some attempts to recover these quantities of hot by mean of use of devices, as the Invention Patent GB 2 385 785 describe, it refer a heat interchange application located in the bottom of the bath or shower that use the residual heat form the waste water in order to pre heat the water from the shower heater feed.

In the state of the art, there is a device that allow to store thermic energy as it describe in the patent application WO2014016456, that reveals a latent thermic storage attachment (100), in modular type, that it comprises at least two storage parallel modules (10), in the form of watertight box and containing in its inner at least (40) a material of change of stage , input collector devices (110), and output collector devices (120), in order to distribute a heat carrier fluid along of the said set, defining each two contiguous storage modules (10), a channel step of heat carrier fluid (130),also being able to have in said attachment (100), parallels lines which comprise at least two storage modules (10) arranged in series, and overlaying lines, that it comprises at least two storage modules arranged in series, making a storage modules matrix.

Patent US20070175609 describe a thermic interchange system between a material of change of phase and a fluid by the use of graphite sheets into the material of change of phase, with the target to increase the heat conductivity. However, the invention does not provide any details about how loading and unloading operations are carried out.

Patent US005220954 describe a heat interchange/accumulator based in materials of change of phase with the particularly characteristic that its cylindric design allow the thermic expansion of the material of change of phase during the charge. The system does not offer either improvements of thermic conductivity to the material of change of phase nor improvements in the speed of transference in the side in the working fluid.

Patent CN201093907Y offer a heat interchange between a material of change of phase and a heat transference fluid, characterized because is formed by a tubes series with fins, disposed in parallel and a system that allow that this fluid goes in the desired direction, that is to say charge or discharge of the system, however, with this system as the charge goes in an ascendant vertical direction, the same problem could happen in relation with the expansion of the material of change of phase above mentioned and therefore, this patent does not resolve the dilemma.

The existing devices currently in use, perform the above cited functions about a module series specifically designed to the specific application to which they are intended. This derivation in various modules, does in a complete installation manufacturing that the costs are elevated, also the maintenance operation, and they are not 100% efficiencies, so, it not be achieving a heat conversion by the incorporated interchange in the system.

To correct these disadvantages, the present invention propose the development and design an interchange system and thermic energy optimizer, by the union in one forced ventilation device, applying to essentially to a dwelling of new construction, where in it include a thermic-energetic retrieve that trough of an integrated thermodynamic system by a compressor, which works in an only one stage, has the capability to change its working regime depending to the dwelling energetic demand.

### DRAWING DESCRIPTION

To complement the description being made and in order to help a better understanding of the characteristics of the invention, according to a preferential example of the practical realization of the invention, is accompanied as an integral part of this description, a set of drawings in which with illustrative and not limitative character, the following has been represented:

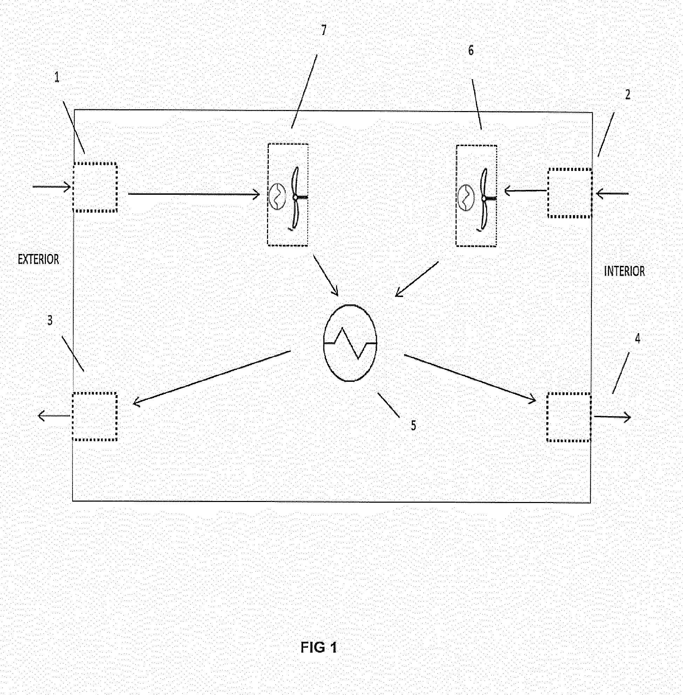

Figure 1.- shows a diagram of the air circulation of the invention system.

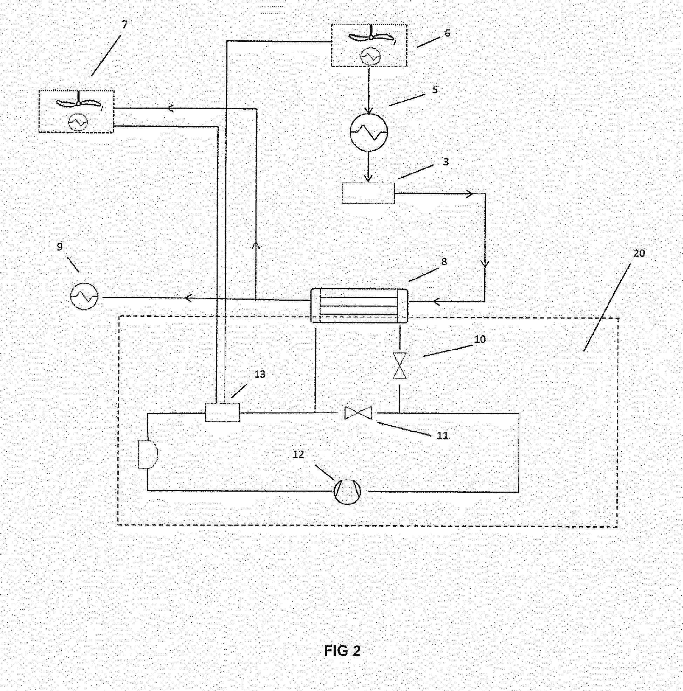

Figure 2.- shows a diagram of the air circulation in combination with the power supply (20) of a part of the system

### INVENTION DESCRIPTION

The interchange and optimizer of thermic energy in the present invention is susceptible of being installed in a dwelling, industrial installation, premise or similar, in the street or outside environment, whereby it results possible the circulating fluid extraction, as the air, from outside environment or from a dwelling inner, to do a residual heat energetic transference to another air flow by interchanger means, with the particularly of that the recovered energy, can be use both to generate sanitary hot water as to heater the environment , or realizing an inversion operation, to refrigerate the dwelling inner space where the system is installed.

### DESCRIPTION OF THE PREFERRED EMBODIMENTS

The thermic energy interchanger and optimizer system of the present realization is composed at least by an air entrance (1) from the outside environment and at least by an air entrance (2) for air admission from the inner of a premise, an industrial installation or a dwelling in which is incorporated the system. In the same way, the system includes at least an air outlet (3) in order to expulse the air to the exterior environment, in addition, at least an air outlet (4) to expulse the air to the premise inner environment, industrial installation or dwelling. An interchanger (5) which can be static or dynamic or even two dynamic exchange discs with a graphene coating to facilitate thermal transmission, which perform the thermal exchange, so that, the incoming air from the outside environment through the air entrance (1) is directed by means of a first fan-interchanger set (7) formed by a fan and an interchanger,
to the interchanger (5) it being this operation controlled by a valve, and emerge by the air outlet (4) to the inner of the dwelling by mean of a nozzle included in the mentioned air exit (4) while at the same time, the air of the inner of the dwelling, do access by the air entrance (2) by mean of a nozzle included in it, and is directed to the interchanger (5). through a second fan-interchanger set, (6) formed by a fan and an interchanger, also being this operation controlled by a valve, where later the air is ejected through the air exit (3). In the interchanger (5) are not combined the airflow mentioned above, but it exists a thermic interchange between both flows, where the hotter air give heat to the colder air, all of this, depending the year season, the hotter air can come from the outside environment or from the dwelling inner.

The thermic energy which is not transfer in the heat interchanger (5) can be recovered by an frigorific device in which the fan-interchanger set is operate (6) in the way that in its operation in mode evaporator allow recover the air energy that goes out through an integrated nozzle in the air outlet (3) being this hot transferred to a condenser installed in an accumulator (8) where the sanitary hot water production is generated. Once the programmed temperature of the accumulator of water heater is reached (8), is produced the close of the solenoid valve (10) installed in the condenser feed circuit (20) that is located into of accumulator (8) and is produce the opening of a solenoid valve (11) connected equally to the condenser feed circuit (20) for the purpose of that the refrigerant in higher pression, through the properly connections, is reached the fan-interchanger set (7) or to an additional interchanger (9) in order to heater the rooms into de dwelling, through the conducts connected to the air outlet (4) or trough hot water circuits tubes to heating, connected to the mentioned additional interchanger (9), counting this feed circuits with the collaboration of a frigorific compressor (12). In this way, it reaches a thermic recovered from the totality of the renovation air energy. Even a extra generation of heat, further cool the air that goes out through the nozzle installed in the outlet air (3) respect to the air which coming from the exterior, this is realized through a nozzle installed in the air entrance (1), The system is susceptible to incorporate an additional intercharger in connection with the second fan-interchanger set (6) in order to recover the residual heat not recovered by the interchanger (5) to be use in the dwelling inner o premise

The system provides a four-way valve (13) electrically connected to the feed circuit (20) and connected by means of conducts both the first fan-interchanger set (7) and the second fan-interchanger set (6)

On other hand, it can realize an inversion of the frigorific circuit on actuating the valve (13) being able to realise the same energetic recover functions, but using the fan-interchanger set (7) as an evaporator and in this way introduce cool air in the inner of the dwelling trough the nozzle integrated in the air exit (4) in order to refrigerate the dwelling inner.

The system provides of a control module for all the function of the thermic energy interchanger-optimiser system, which is in charge of managing and controlling all the operation of the different devices, including the access to all the system functions from the exterior to telematic control and maintenance of the device, from the producer and or a service of technical attention and user access for reprogramming on from outside devices such as phones, tablets or other wire or wireless devices, and also including the electrical performances of the components of the device

The system include means of conduction within the system, another conventional control devices, as filters, pressure indicated or temperature sensors, connected to the feed circuit (20), also controlled by the control module y distributed through the flow circuit of the fluids, in order to ensure the safe and efficient functioning of the entire system.

The system is capable of including an odorising device in the ventilation to ambient the rooms.

The system can include an ozonation device to further purify the new air introduced into the rooms, as well as can include activated carbon filters to increase the purification of the air introduced into the rooms.

Finally, the system allows the incorporation of an air quality analysis set in the rooms, in order to know the air that moves both from the interior to the exterior and from the interior according to the degree of pollution that exists at that time.

## Claims

1. Thermic energy interchanger and optimiser system for dwelling, industries, premises or similar that comprising means of air inlet (1) from the outside zone, means of air entrance (2) from the inner zone , means of air exit (3) to the outside zone and means of air exit to the inner zone, one interchanger (5) where the air current arrive; an initial
fan-interchanger set (7) which directs the inlet air from the outside to the interchanger mentioned (5), a second fan interchanger set (6) which directs the air from the dwelling inner to the interchanger mentioned (5) an accumulator (8) that include a condenser in connection with air exit (3) an initial solenoid valve (10) installed into the condenser feed circuit (20) which is located intro the accumulator (8) a second solenoid valve (11) connected to the condenser, a frigorific compressor (12) connected to the condenser of the accumulator (8) by means of the feed circuit (20) an interchanger (9) in contact with the condenser (8) and conducting means inside the system.

2. Thermic energy Interchanger and optimiser system according to claim 1, characterized because the air entrance (1) from the outside zone and the air entrance (2) disposed each one a nozzle.

3. Thermic energy Interchanger and optimiser system according to claim 1, characterized because means of the outlet air (3) to the outside zone and the outlet air (4) to the inner zone dispose each one a nozzle.

4. Thermic energy Interchanger and optimiser system according to claim 1, characterized because the interchanger (5) can be static or dynamic or even two interchange dynamic disks with a graphene cover.

5. Thermic energy Interchanger and optimiser system according to claim 1, characterized because the fan-interchanger set (6) in its operation in evaporator mode recovers the air energy that goes out through the integrate nozzles in the air exit (3) and
transfer it to a condenser installed in an accumulator (8) where the sanitary hot water is generated.

6. Thermic energy Interchanger and optimiser system according to claim 1, characterized because once the programmed water heater temperature is reached (8), it is produce the close of an initial solenoid valve (10) installed in the condenser feed circuit (20) that located into the accumulator (8) and is produced the open of the solenoid valve (11) equally connected to the condenser feed circuit, in order to the refrigerant at high
pressure, through the properly connections, reach the fan-interchanger set (7) or either to the interchanger.(9)

7. Thermic energy interchanger and optimiser system according to claim 1, characterized because the system disposes a four-way valve (13) connected electrically to the feed circuit (20) and connected by means of conductors both to first the fan-interchanger set (7) as the second fan-interchanger set (6).

8. Thermic energy Interchanger and optimiser system according to claims 1 and 7, characterized because the four-way valve (13) by the reversing of the refrigeration circuit allows to the fan-exchanger set (7) act as evaporator in order to generate cool air to introduce in the dwelling trough the nozzle (4).

9. Thermic energy Interchanger and optimiser system according to claim 1, characterized because the system is susceptible to include an odorise device in the ventilation in order to ambient the rooms.

10. Thermic energy Interchanger and optimiser system according to claim 1, characterized because the system provides of a control module for all the function of the thermic energy interchanger optimiser system including the access from the outside for all the system, to control and maintenance the system

11. Thermic energy interchanger and optimizer system according to claim 1 that is characterized because the system also includes a device of ozonisation of the new air introduced into the rooms.

12. Thermic energy interchanger and optimizer system according to claim 1 that is characterized because the system includes activated carbon filters to the air introduced into the rooms.

13. Thermic energy interchanger and optimizer system according to claim 1 that is characterized because the system also includes an air quality analysis device in the rooms.
